# EUROPEAN PATENT APPLICATION

(11) **EP 3 816 637 A1**
(43) Date of publication of application: **05.05.2021**
(21) Application number: 19206592.8
(22) Date of filing: 31.10.2019
(51) Int. Cl.: G01Q 70/14, B81C 1/00, G01Q 70/16

(54) **METHOD FOR MANUFACTURING A PROBE**

(71) Applicant: ETH Zurich, 8092 Zurich (CH)
(72) Inventor: ZENOBI, Renato, 8093 Zürich (CH); SACHAN, Amit Kumar, 8303 Bassersdorf (CH)

(57) **Abstract**

Method for manufacturing a probe comprising a support chip (2) and an in particular metallic first element(1), comprising the steps of bonding a first section (11) of the first element (1) to a metallized surface of the support chip (2), and positioning, in particular bonding, a second section (12) of the first element (1) on a surface of an auxiliary substrate (3). Wherein the second section (12) is configured to form the end of the first element (1), releasing the second section (12) from the auxiliary substrate (3), and wherein a cantilever forms between the first (11) and the second (12) section of the first element (1).

## Description

### Technical Field

The present invention relates to a method for manufacturing a probe, the probe and a use of the probe according to the independent claims.

### Background Art

High-resolution surface scanning measurement techniques such as atomic force microscopy (AFM) and scanning tunnelling microscopy (STM) and all kinds of further surface scanning techniques require a mechanical probe equipped with a tip of the micron- or nanoscale size.

Different variations or operation modes of AFM demand different types of probes, ranging greatly in size, shape, properties, material coating as well as price. Metallic or metallized AFM probes are known for their high significance in direct applications in Atomic force spectroscopy, Kelvin probe force microscopy, scanning capacitance microscopy, electrostatic force microscopy, electrochemical force microscopy, tip-enhanced fluorescence spectroscopy, tip-enhanced Raman spectroscopy, nanoscale infrared spectroscopy, scanning near-field optical microscopy and similar techniques benefitting from high lateral imaging resolution, high conductivity and/or large local electromagnetic field enhancements.

The most common methods to fabricate such probes involve multi-step microfabrication processes, resist coating, photolithography, negative masking, layer/s of metal/materials coating, wet and/or dry etching processes etc. on a highly doped or less-doped or un-doped silicon wafer.

A specific application of a scanning measurement technique is demonstrated in US 2019/0170651 A1. The document discloses an example of a typical probe for performing tip-enhanced Raman scattering measurements. The probes are manufactured based on a semiconductor probe that is dipped into a solution of a metal to achieve a metallic coating. However, the method does not allow the manufacturing of a fully metallic probe that would be advantageous for measurements requiring high-conductance probes, or for tip-enhanced optical spectroscopy studies by avoiding the problem of wearing-off of the metal parts over metallized silicon probes and providing a consistent enhancement of plasmonic signals.

The document Hantschel et al., "Fabrication of a full metal AFM probe and its applications for Si and InP device analysis", Proc. SPIE 3875, Materials and Device Characterization in Micromachining II, (3. September 1999) discloses the fabrication of full metal AFM probes. The developed fabrication process uses silicon wafers as substrate material. The wafers are structured to define a probe area and the structures are coated with a metallic layer. After etching away the wafer, the metallic structures are released and form the probes. The probes that result from such manufacturing processes are not suitable for dynamic mode operations in AFM related applications.

Anyway, none of the cited documents provides a manufacturing method that is applicable to manufacture fully metallic probes for a wide range of applications including tip-enhanced Raman scattering.

In addition to the disadvantages of the prior art as discussed above, the manufacturing of fully metallic probes is very complex and requires many processing steps, and results in high carbon footprint.

### Disclosure of the Invention

The problem to be solved by the present invention is therefore to provide a method for manufacturing of a probe and a probe that overcome the present disadvantages of the state of the art.

This problem is solved by the first, second and third aspects of the present invention.

A first aspect of the invention refers to a method for manufacturing a probe comprising a support chip and an in particular metallic first element.

The term probe refers in particular to probes that are used in scanning probe techniques, such as Atomic Force Microscopy (AFM) or Scanning Tunnelling Microscopy (STM) measurement setups. Therefore, the probe is the part of the setup that is used for the point measurement or raster scanning the surface of a sample under examination. In particular, such a probe might be contaminated during and/or after use. In addition, the probe might break during the measurements, since it is very sensitive to external forces and the surface being examined.

The support chip is in particular of dimensions and materials similar to the commercial AFM support chip that is formed to fit into a commercial AFM tool. Advantageously, the support chip might have the dimensions, length between 10mm > L > 0.5mm, width between 5mm > W > 0.5mm and thickness between 0.5mm > T > 0.05mm.

For an advantageous embodiment, the first element has the form of a wire or ribbon, in particular of a metallic wire or ribbon. Anyway, the term wire here refers to all kind of longitudinal elements, wherein the cross-section can have various shapes. Therefore, the wire might have a circular, rectangular, triangular or polygonal cross-section. Advantageously, the first element is a wire with a diameter d1 of 300µm ≥ d1 ≥ 5µm or a ribbon with dimensions width w of 300µm ≥ w ≥ 1µm and thickness t of 100µm ≥ t ≥ 1µm.

The support chip has at least a metallized surface layer. Such a surface might be only a thin metallic layer (below 50µm thick) or a thin metallic foil. In a further advantageous embodiment, the support chip can be a fully metallic chip. In a further embodiment, the support chip might comprise several layers of various metals.

Advantageously, the metallic surface of the support chips can be of one metal or a combination of metals selected from the group of gold, aluminium, chromium, titanium, nickel, copper, platinum or their alloys.

In an advantageous embodiment, the metallic layer on the support chip comprises an adhesion layer of 2-100nm of a high affinity metal such as Cr or Ti, and at least a layer of 0.02-50µm of another metal, e.g. gold, that has a strong bonding capability with the metal of the first element.

The method comprises the steps of bonding a first section of the first element to the metallized surface of the support chip. In an advantageous embodiment, where the first element is a wire, this means that a section of the wire is bonded to the support chip.

In particular, a section of the first element bonded to the support chip is called a bonding point.

Advantageously, the bonding is performed by so-called wire bonding techniques that are standard electrical interconnection techniques in microelectronic packaging technology. Wire bonding is used for electrically connecting microchips to the terminals of a chip package or directly to a substrate. Wire-bonding might refer to wedge bonding, ball bonding or laser bonding. The techniques are further explained in Fischer, A., Korvink, J., Wallrabe, U., Roxhed, N., Stemme, G. et al. "Unconventional applications of wire bonding create opportunities for microsystem integration" Journal of Micromechanics and Microengineering, (2013) 23(8): 083001; and in H. K. Charles Jr. Encyclopedia of Materials: Science and Technology (Second Edition) Microelectronic Packaging: Electrical Interconnections, (2001), Pages 5616-5635.

So-called wedge bonding is a well-known technique in integrated circuit industry. It refers to a wire bonding technique, wherein a wedge bonding tool has a capillary for guiding a metallic wire or metallic element. The end of the bonding tool, where the metallic wire exits the capillary is formed as a stamp. The stamp presses the metallic wire against the underlying bondable substrate and by applying ultrasonic and/or thermal energy, a bond between the wire and the underlying substrate is formed.

So-called ball bonding is a further well-known technique in integrated circuit industry. It refers to a wire bonding technique, wherein a ball bonding tool has a capillary that guides a wire or metallic element. The end of the wire that exits the capillary is formed as a ball by melting the end of the wire, e.g. by applying a high-voltage electric spark (electronic flame-off process). Subsequently, the ball is pressed against an underlying bondable substrate and the inside form of the capillary cone that forms the exit of the capillary tool deforms the ball that is bonded to the underlying substrate. The bond itself forms by a combination of the applied pressure, heat (e.g. from the heated capillary tool and/or underlying substrate) and ultrasonic energy that is applied.

So-called laser bonding is performed by bringing the wire or metallic element in close contact to the underlying substrate and forming the bond by means of a laser pulse that is applied.

In particular, every bond that is formed according to the method of the invention might be manufactured by wedge bonding, ball bonding or laser bonding.

Bonding the first section of the first element to the support chip, refers in particular to fixing the section to the metallized surface of the support chip. Such bonding is in particular achieved by bringing the first section and the surface layer of the support chip into close contact, such that interdiffusion of atoms takes place.

The bonding mechanism between the first section of the first element and the metallized surface of the support chip is advantageously a classical bonding mechanism, wherein the bond formation and bond quality depend on various bonding and material parameters, such as type of metal layer, metal layer thickness, cleanliness of the metal layer, loop geometry of the bond, bond force, ultrasonic energy, temperature, etc.

The method comprises further the step of positioning, in particular bonding, a second section of the first element to a metallized surface of the auxiliary substrate. If the advantageous first element is a wire or ribbon, the second section of the first element refers in particular to a second section of this wire or ribbon. Such second section has advantageously an average distance ds of 0.05mm ≤ ds ≤ 2mm to the first section of the first element.

The term 'positioning' here acknowledges the fact that the end of the first element might be either formed by forming a weak bond between the second section and the auxiliary substrate by means of ball or wedge bonding, or by only pressing the second section against the auxiliary substrate without creating a bond between the second section and the auxiliary substrate.

Advantageously, the auxiliary substrate is a further chip, wherein the surface of such a chip can be metallized. Advantageously, the auxiliary substrate is ultra-flat with arithmetic mean roughness Rₐ with Rₐ < 0.1 µm and is comprised one of polycrystalline silicon, amorphous silicon, fused silica, quartz, glass, sapphire, alumina or mica sheet.

Advantageously, the surface of the support chip is arranged on the same level as the surface of the auxiliary substrate, wherein the respective level refers to the vertical alignment of the respective surface of the chip. Therefore, if the two surfaces of the support chip and the auxiliary substrate are arranged on the same level, this means that the two surfaces of the respective chip and the substrate are vertically aligned, such that they form essentially one plane.

In a further advantageous embodiment of the invention, the surface of the support chip might be arranged on a lower level than the surface of the auxiliary substrate.

Advantageously, the auxiliary substrate is arranged close to the support chip with a gap between an edge of the support chip and an edge of the auxiliary substrate.

In particular, the auxiliary substrate is arranged relatively to the support chip, such that a small gap is formed between an edge of the auxiliary substrate and an edge of the support chip, wherein the gap might be formed in vertical or horizontal direction or both, between the two edges of the chip and the substrate respectively.

Advantageously, the distance of the gap between the opposing edges of the support chip and the auxiliary substrate correspond to the distance between the first and the second section of the first element. In particular, the distance dg of the gap is 0.1µm ≤ dg ≤1000µm.

In particular, a distance of a first bonding, the point where the first section is bonded to the support chip, and the nearest edge of the support chip is 0.1µm to 1000µm.

In a further method step, the first element is caused to end or separate at, or adjacent to, the second section, in particular to form an ending of the first element, respectively an ending of a cantilever.

Advantageously, if the first element is a wire that forms the cantilever, the cantilever has a longitudinal extension l_{wi} of 25µm ≤ l_{wi} ≤2000µm and a diameter d_{wi} of 5µm ≤ d_{wi} ≤ 300µm. If the first element is a ribbon that forms the cantilever, the cantilever has a longitudinal extension lᵣ of 25µm ≤ lᵣ ≤ 2000µm, width wᵣ of 1µm ≤ wᵣ ≤300µm and a thickness tᵣ of 1µm ≤ tᵣ ≤ 100µm.

Ending or separating of the first element refers in particular to tearing the first element close by the second section. Such ending or separating might also be done by cutting the first element in two parts.

In an advantageous embodiment, the first element is a wire or ribbon, wherein the separation of the wire or ribbon is done by clamping and pulling it in X-Y-Z direction until it tears or by cutting it into two parts.

The ending or separation of the first element adjacent to the second section is in particular performed after the second section is positioned to the surface of the auxiliary substrate.

In an advantageous embodiment, the end of the first element, respectively the second section that forms the end of the element, is weakly bonded to the auxiliary substrate, wherein weakly bonded refers to a bonding that can easily be released or does not permanently bind the first element, respectively its end, respectively the second section, to the auxiliary substrate.

In a further method step of the invention, the second section is released from the auxiliary substrate.

Such release might be achieved by removing the auxiliary substrate, in particular by pulling off the auxiliary substrate parallel to its surface. The second section release easily if the positioning of the second section is done without bonding the second section to the auxiliary substrate or if the bonding is only very weak.

Advantageously, in a further method step of the invention, the second section of the first element is released by selective wet etching and dissolution of the material of the auxiliary substrate.

In another advantageous embodiment of the invention, the method comprises the step of releasing the second section of the first element from the auxiliary substrate by applying a lateral force on the bonded second section in a plane parallel to the surface of auxiliary substrate and perpendicular to the direction of the bonded first element.

Advantageously, a further embodiment of the method comprises the step of releasing the second section of the first element from the auxiliary substrate by inserting a sharp clamp tool around the second section bond from the directions perpendicular to the direction of the bonded first element and pulling up the clamp.

After release of the second bonding, the bond that holds the second section of the first element to the auxiliary substrate, a cantilever forms between the first and the second section of the first element.

The term cantilever advantageously refers to the element that forms a holder for a tip. The cantilever is in particular anchored at a first bonding point of the first section and is free floating at the second section of the first element, in particular at the ending of the first element.

In a further advantageous embodiment of the invention, the second section releases from the surface of the auxiliary substrate directly after positioning the second section on the auxiliary substrate, due to insufficient bonding forces. In such an embodiment, the second section never bonds to the auxiliary substrate but the auxiliary substrate serves in particular only as an underlying ultra-flat substrate to form the end of the first element, e.g. by pressing the second section against the auxiliary substrate and cutting the first element in particular through the lateral and/or vertical motion of wedge/ball bonding tool or lateral motion of the base holding the substrate.

In a further advantageous embodiment of the invention, the bonding strength between the first section of the first element and the metallized surface of the support chip is stronger than a bonding strength between the second section of the first element and the auxiliary substrate. Therefore, a bonding between the second section of the first element and the auxiliary substrate can be released easily, wherein the bonding between the first section of the first element and the support chip cannot be released, at least not before the release of second section bond.

In particular bonding strength is measured by applying shear forces to the ball bonds or wedge bonds in a lateral direction (parallel to an underlying substrate or chip and perpendicular to the cantilever or bonding direction).

In particular, bonds are considered weak if applied shear forces to release a ball bond of ca. 50µm diameter or wedge bond of ca. 50µm width from the respective underlying substrate or chip are below 20cN.

In a further advantageous embodiment of the invention, the method comprises further the steps of bonding an in particular metallic second element to the second section of the first element, in particular by means of ball or wedge bonding, wherein the second element is caused to end, in particular to bear, into a tip. The tip is in particular adapted to scanning and/or point measurements.

An advantageous tip formed by this method has a tip radius of < 100nm (in particular below 20nm).

Such metallic second element is in particular a second wire or ribbon that forms into a tip. Advantageously, the second element that might be formed as a tip has a diameter d2 of 50µm > d2 > 1µm, and made of gold, silver, aluminium, platinum, copper, tungsten or one of these metal's alloys.

Bearing into a tip happens preferably by means of tearing the wire or ribbon until it breaks or by means of etching the bonded wire or ribbon into a tip. Advantageously, the wire or ribbon bonded at the second section of the first element is first teared into a tip and later etched into a specific form.

A further advantageous method of the invention comprises the step of causing the second element to tear into a tip with a longitudinal extension into a direction perpendicular to a surface of the cantilever.

An advantageous bonded second element that is a wire or ribbon forming a tip would therefore form an angle of 90° between its longitudinal axis and the surface of the cantilever.

A further advantageous method according to the invention comprises the step of causing the bonded second element to tear into a tip with a longitudinal extension tilted into a direction with an angle α to a surface of the cantilever, in particular with 15° ≤ α ≤ 90°.

An advantageous bonded second element that is a wire or ribbon forming a tip would therefore form the angle α between its longitudinal axis and the surface of the cantilever.

Advantageously, such second element, in particular forming a tip, is tilted in a direction facing away from the first section.

A further advantageous embodiment of the inventive method comprises the steps of bonding an in particular a short section of a metallic wire or ribbon to the second section of the first element, in particular by means of ball or wedge bonding. The bonded short wire or ribbon at the second section of the first element has in particular a length l_{w} of 10mm ≥ l_{w} > 0.05mm.

Advantageously, an angle between a surface of the cantilever and the longitudinal extension of the bonded short section of a second element in particular a metallic wire or ribbon to the second section of the first element is β, with 0 < β ≤ 90°.

Advantageously, the bonded short section of a second element in particular a metallic wire or ribbon to the second section of the first element might be transformed into a tip respectively sharpened by applying dry and/or wet etching methods.

A further advantageous method according to the invention comprises the steps of bonding the first section of the first element to the metallic surface of the support chip by means of ball bonding, wedge bonding or laser bonding methods. In particular, if the first element is a metallic wire or ribbon, this means that the metallic wire or ribbon is bonded by the respective method ball bonding, wedge bonding or laser bonding to the surface of the support chip.

In a further advantageous embodiment, the method comprises the step of positioning and/or bonding the second section of the first element to the metallic surface of the auxiliary substrate by means of ball bonding, wedge bonding or laser bonding methods.

In particular, the positioning of the second section refers to only performing the bonding step without the bond actually sticking to the auxiliary substrate since no or only a weak bond is formed between the first element and the auxiliary substrate. In particular, the term "weak bond" refers to the bonds with less bonding strength defined by a lateral shear force test, as mentioned above.

In particular, if the first element is a metallic wire or ribbon, this means that the metallic wire or ribbon is bonded by the respective method, ball bonding, wedge bonding or laser bonding, to the surface of the auxiliary substrate.

In a further embodiment of the method according to the invention, the auxiliary substrate has a metallic surface, wherein a metallic layer of this surface transfers to the back surface of the second section of the first element when positioning the second section on the metallic surface of the auxiliary substrate, before the release of the second section, to form a reflective coating on the back surface of the second section, respectively on the back surface of the cantilever. The back surface is in particular the surface facing away from the surface comprising the second element, respectively the tip or a short wire or ribbon.

In an advantageous embodiment, the auxiliary substrate has an ultra-flat surface with arithmetic mean roughness, Rₐ, whith Rₐ ≤ 0.1 µm.

The metallic surface of the auxiliary substrate is in particular a metallic, in particular gold or aluminium, surface that is evaporated to the auxiliary substrate, in particular without an adhesion layer of metal such as chromium or titanium. Therefore, the metallic, in particular gold or aluminium, layer releases easily from the auxiliary substrate when the second section, respectively the cantilever is pressed against it for bonding while applying ultrasonic and/or thermal energy, and bonds to the back side of the second section, respectively the cantilever.

In particular, due to pressing the second section against the ultra-flat auxiliary substrate while positioning the second section on the auxiliary substrate, the back side of the second section respectively the cantilever becomes ultra-flat. Thereby, the back side of the second section respectively the cantilever results in a metallic, in particular gold or aluminium coated, ultra-flat surface.

In a further advantageous embodiment of the invention, the first element is bonded to the support chip by multiple bonding points. This means that additional to the first section, multiple additional sections of the first element are bonded to the support chip, forming multiple bonding points.

This bonding multiple bonding points might be manufactured by means of wedge or ball bonding. Such a configuration allows to tune the length of the cantilever of the probe and therefore allows to tune the resonance frequency of the cantilever, respectively the tip, if a tip is bonded to the second section of the first element respectively to the cantilever. Advantageously, the first element is bonded multiple times on the support chip before the second section is bonded to the auxiliary substrate. Such an embodiment might comprise two or three or up to ten bonding points to bond the first element to the support chip. In another embodiment of the method, such bonding points might be added later on, after the auxiliary substrate has already been released, to tune the probe. In a further advantageous embodiment, the additional bonding points might be predetermined breaking points that can be broken when mounting the probe to the respective setup, such that the resonance frequency of each probe can be tuned according to the actual requirements.

A further advantageous method of the present invention is a method wherein all the steps are executed automatically, e.g. by a process line etc.

A second aspect of the invention refers to a probe comprising a support chip and an in particular metallized first element. The probe might have the same characteristics as the probe manufactured with the method referred to in the first aspect of the invention.

The metallic first element, in particular a wire or ribbon, has a first section bonded to a metallized surface of the support chip and a second section released from an auxiliary substrate to which it was positioned. The first element ends at the second section and a cantilever forms between the released end of the second section and the first section that is bonded to the support chip. Therefore, the first element is free floating at its end at the second section and bonded at the first section.

In a further advantageous embodiment of the invention, the probe comprises an in particular metallic second element bonded to the second section of the first element. In particular, the second element is bonded to the side of the second section of the first element facing away from the surface of the support chip or from the auxiliary substrate.

The second element, in particular a wire or ribbon, ends in a tip, in particular adapted to perform scanning or point measurements using scanning probe microscopy and spectroscopy techniques.

In a further advantageous embodiment of the probe, a back surface of the second section that faces into a direction of the auxiliary substrate has a reflective and/or ultra-flat back surface. In particular, wherein the back surface is the surface facing away from the surface comprising the tip.

In an further advantageous embodiment of the invention, the probe might only comprise a cantilever for scanning measurements, without a tip added to the cantilever. Such probes are called tip-less cantilever.

A third aspect of the invention refers to the use of the probe according to the second aspect of the invention. The probe can be used for performing raster scanning measurements and/or point measurements using scanning probe microscopy and spectroscopy techniques benefitting from high lateral imaging resolution, high conductivity and large local electromagnetic field enhancements, such as AFM, STM, atomic force spectroscopy, Kelvin probe force microscopy, scanning capacitance microscopy, electrostatic force microscopy, electrochemical force microscopy, tip-enhanced fluorescence spectroscopy, tip-enhanced Raman spectroscopy, nanoscale infrared spectroscopy, scanning near-field optical microscopy and other similar techniques.

Other advantageous embodiments are listed in the dependent claims as well as in the description below.

### Brief Description of the Drawings

The invention will be better understood and objects other than those set forth above will become apparent from the following detailed description thereof. Such description makes reference to the annexed drawings, wherein:
Fig. 1a to f show a schematic of a procedure of a method according to an embodiment of the invention; Fig. 1g and 1h show each a scanning electron microscopy (SEM) picture of the result of the procedure for two different embodiments.
Fig. 2 shows a schematic of method steps according to a further embodiment of the invention;
Fig. 3a to g show method steps according to an embodiment of the invention; Fig. 3h shows an SEM picture of the result of the procedure.
Fig. 4a' to d show method steps according to an embodiment of the invention; Fig. 4e shows SEM picture of the result of the procedure.
Fig. 5 shows SEM pictures of various embodiments of the invention.
Fig. 6a and b show schematics of further embodiments of the invention;
Fig. 7 shows a schematic of method steps according to a further embodiment of the invention;
Fig. 8a shows a schematic of an embodiment according to the invention and Fig. b and c show SEM pictures of embodiments of the embodiment;
Fig. 9a shows a schematic of a further embodiment according to the invention and Fig. b, c and d show SEM pictures of the embodiment;
Fig. 10a to c show SEM pictures of embodiments according to the invention with increasing resolution;
Fig. 11a and b show SEM pictures of an embodiment according to the invention;
Fig. 12 shows SEM pictures of embodiments of the probe;
Fig. 13a and b show measurement data of embodiments according to the invention; and
Fig. 14a and b show further measurement data received from embodiments according to the invention;

### Modes for Carrying Out the Invention

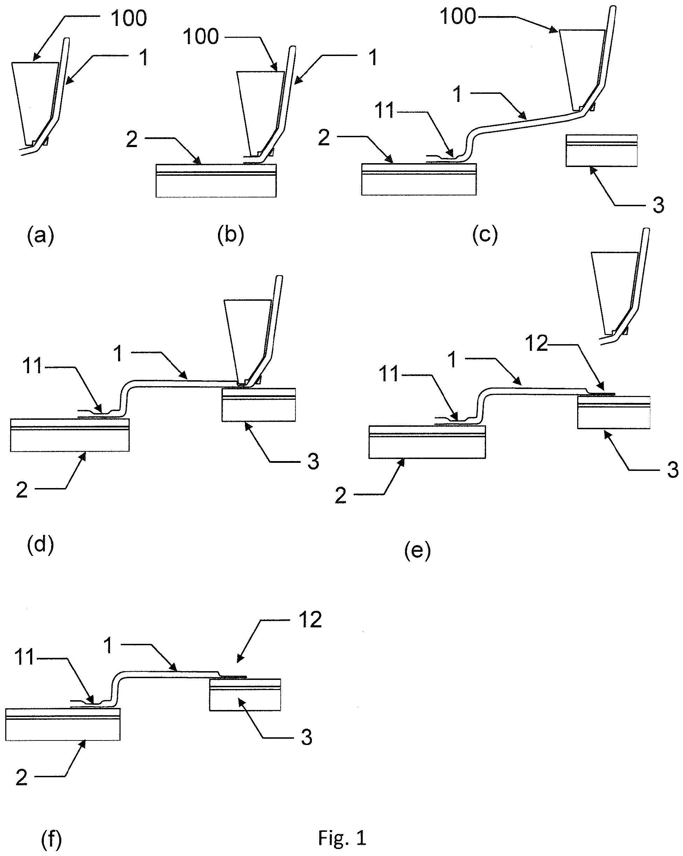

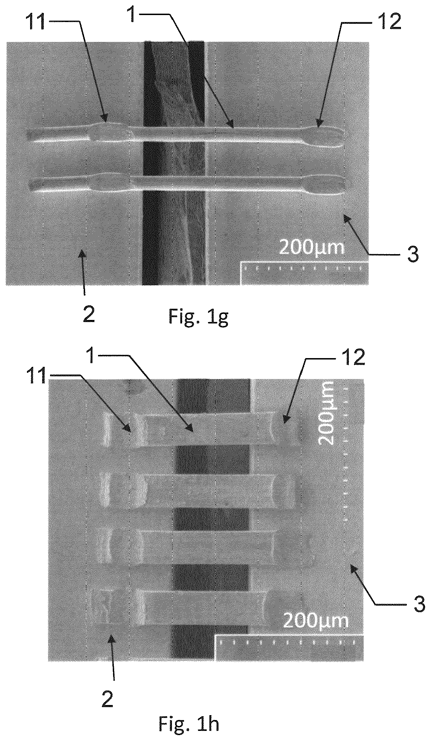

Fig. 1 shows a schematic of the different steps of a method according to an embodiment of the invention. Fig. 1a shows an in particular metallic first element 1 that is in particular a metallic wire or ribbon, fed down in a capillary of a wedge bonding tool 100. A first section 11 of the first element is bonded onto a surface of a support chip 2 by means of wedge bonding as shown in Fig. 1a to If. For wedge bonding of the first element 1, the bonding tool 100 has a pointed stamp with an integrated wire feeding channel that carries the first element 1 (Fig. 1a). The first element 1 is pressed against the support chip 2 and ultrasonic and/or thermal energy is applied, for bonding the first section to the support chip and therefore forming a so-called first "wedge" (Fig. 1b). Subsequently, the bonding tool is moved to the auxiliary substrate and the second "wedge" is formed at the second section 12 of the first element 1 (Fig. 1c and 1d). The first element tears by motion of the bonding tool 100 in particular in horizontal and/or vertical direction (Fig. 1e) while the first element 1 is clamped within the tool 100, or by horizontal motion of the base holding the substrate. Accordingly, the second section forms the end of a cantilever sitting on the auxiliary substrate as shown in Fig. If, and as shown in a SEM picture in Fig. 1g.

The second section respectively the end of the cantilever might be removed from the auxiliary substrate, respectively the auxiliary substrate is removed, here to result in a floating end that actually enables the cantilever to oscillate (not shown in the Figure). The surface of the auxiliary substrate 3 is positioned on a level above the level of the surface of the support chip 2 or at the same level.

Fig. 1g shows a scanning electron microscopy picture (SEM) of probes manufactured by the method steps schematically shown in Fig. 1a to If. The probes are advantageously manufactured in a process line. The first element 1 is bonded with its first section 11 to the support substrate 2 by means of wedge bonding. In addition, the second section 12 is bonded to the auxiliary substrate 3 by means of wedge bonding. The gap between the support substrate 2 and the auxiliary substrate 3 is visible on the picture.

Fig. 1h shows a further SEM picture of a further embodiment of the probes. The probes in this picture are manufactured by using a ribbon as a first element 1. The first element 1 is bonded with its first section 11 to the support substrate 2 by means of wedge bonding. In addition, the second section 12 is bonded to the auxiliary substrate 3 by means of wedge bonding. The gap between the support substrate 2 and the auxiliary substrate 3 is visible on the picture.

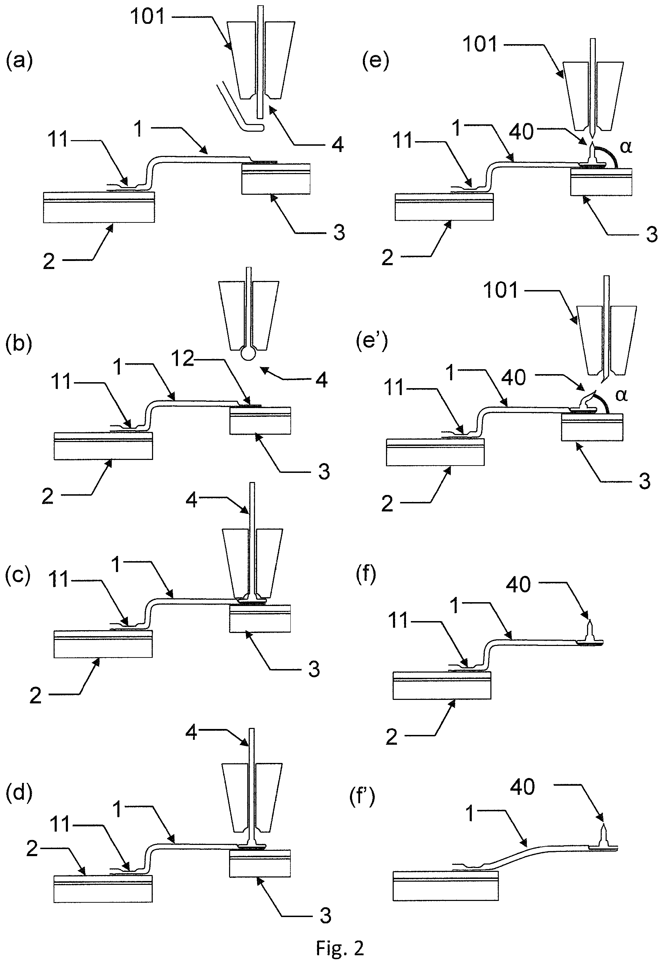

Fig. 2 shows a schematic of further process steps of an embodiment of the method according to the invention. In addition to the method steps in Fig. 1, a second element 4 is bonded to the second section 12 of the first element 1, as shown in Fig. 2a to 2d, in particular as shown in the figures by means of ball bonding.

In particular, the second element 4 has the form of a wire or ribbon. The second element 4 is in particular positioned by means of the ball bonding tool 101. An end of the second element 4 protruding out of the ball bonding tool 101 is melted using a high-voltage spark, e.g. by an electronic flame-off process, and the surface tension of the melted metal facilitates formation of a free-air ball (FAB) (Fig. 2b). The capillary tool 101 with a free-air ball at the end descends to the second section 12 of the first element 1, and presses against the auxiliary substrate 3 while applying ultrasonic and/or thermosonic energy to form a bond between the end of the second element 4 and the second section 12 of the first element 1 (Fig. 2c). In an embodiment of the invention, the ball is pressed to the auxiliary substrate 3 e.g. under the application of heat (thermo-compression), ultrasound energy (ultrasonic) or both (thermosonic), for establishing the bond (Fig. 2d). The bonding tool 101 is removed while the second element 4 is clamped, causing the second element 4 to tear and form a tip (Fig. 2e, 2e').

In a further advantageous embodiment of the invention, the teared end of the second element 4 bonded on the second section of the first element forms a tip 40 of the probe as shown in Fig. 2e and 2e'. In addition, in a further advantageous embodiment of the invention, the tip might be further formed by means of mechanical or chemical shaping methods, e.g. dry and/or wet etching methods.

The tip 40 of the probe might be formed such that it directs in different directions, as shown in Fig. 2e and 2e' respectively, in particular, with an angle α to a surface of the cantilever, with 15° ≤ α ≤ 90°.

Eventually, the auxiliary substrate 3 might be removed and leaving the second section 12 of the first element 1 freely oscillating around the bonded first section 11 of the first element 1 as shown in Fig. 2f and 2f' . In addition, the cantilever might be formed in a preferred form, as shown in Fig. 2f and 2f', in order to modulate the resonance frequency and/or spring constant of the cantilever.

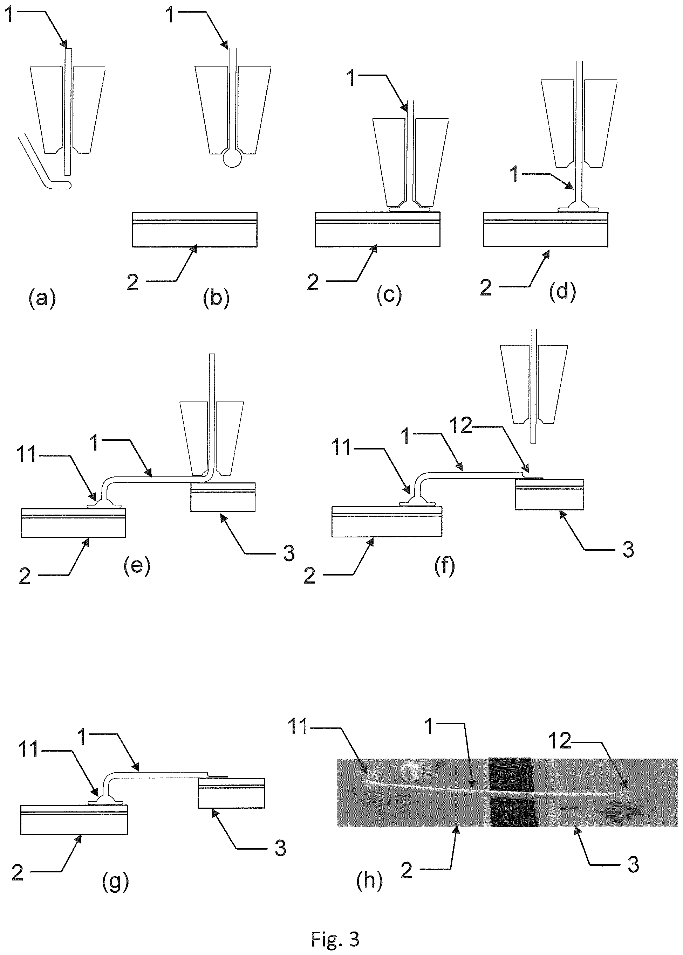

Fig. 3 shows schematically the steps of a method according to a further embodiment of the invention. The method in Fig. 3a to 3g is analogue to the method as shown in Fig. 1, except that the first element 1 is bonded to the support chip 2 by means of ball bonding instead of wedge bonding. Fig. 3h shows an SEM picture of a probe manufactured by the method steps shown in Fig. 3a to 3g.

The first element 1 is bonded with its first section 11 to the support substrate 2 by means of ball bonding. In addition, the second section 12 is bonded to the auxiliary substrate 3 by means of wedge-like bonding.

The gap between the support substrate 2 and the auxiliary substrate 3 is visible on the picture.

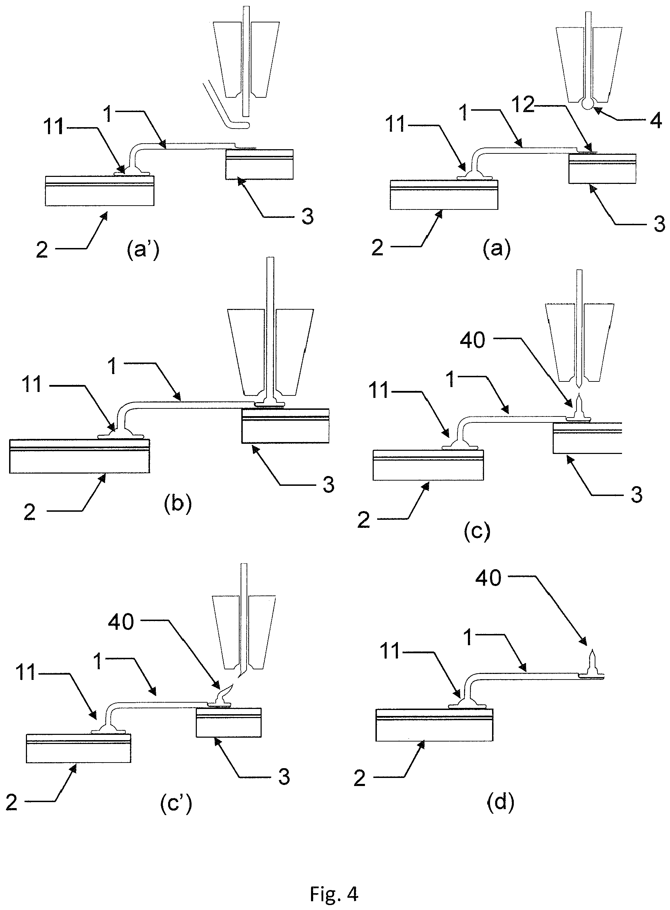

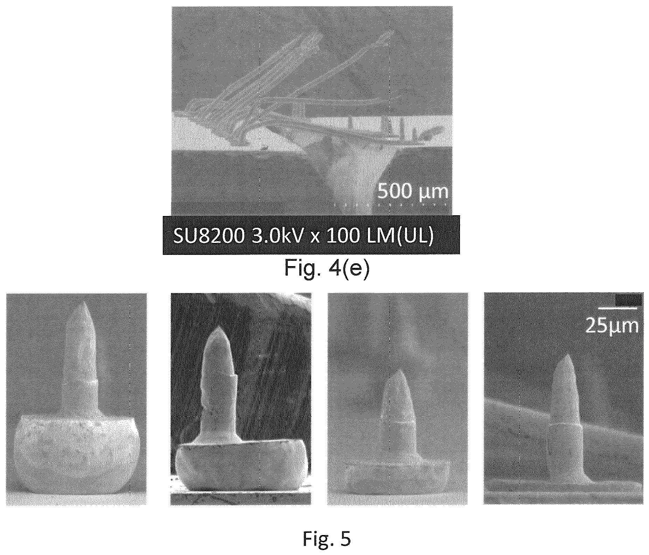

Fig. 4 shows schematically the steps of a method according to a further embodiment of the invention. The method in Fig. 4a' to 4g is analogue to the method as shown in Fig. 2, except that the first element 1 is bonded to the support chip 2 by means of ball bonding instead of wedge bonding.

Fig. 4e shows an SEM picture of probes manufactured by the method steps shown in Fig. 4a to d, wherein some of the cantilevers are released, respectively the second sections 12 of some of the cantilevers are released from the auxiliary substrate 3, and some of the cantilevers are to be released.

Fig. 5 shows a collection of SEM pictures of various embodiment of metallic tips that can be bonded to the second section by means of ball bonding. As shown before in the schematic Fig. 4c and 4c' as well as Fig. 2e and 2e', the tip might be oriented in various directions with an angle α to a surface of the cantilever, with 15° ≤ α ≤ 90.

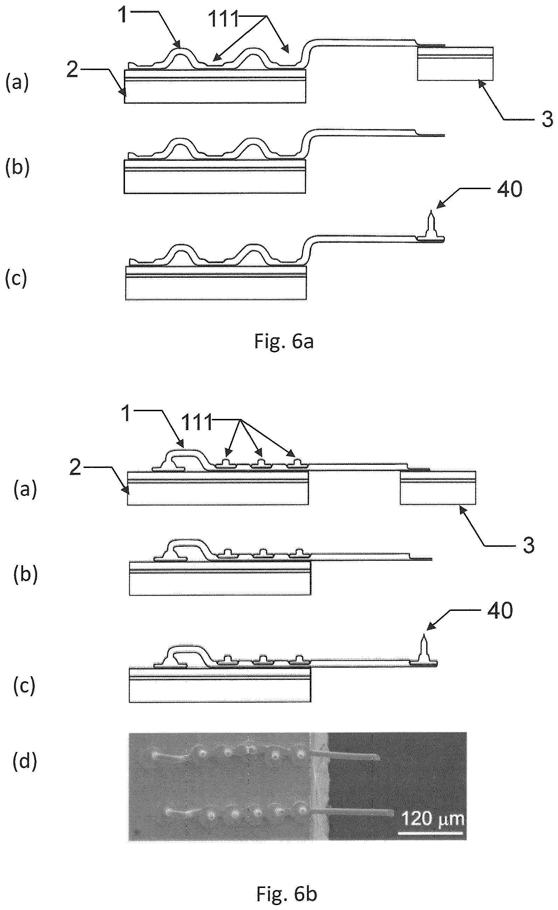

Fig. 6a shows in (a) to (c) schematic steps of a further embodiment of a manufacturing method according to the invention. A probe with multiple bonding points (111) on the support chip 2 is manufactured means of wedge bonding.

Fig. 6b shows in (a) to (c) schematic steps of a further embodiment of a manufacturing method according to the invention. A probe with multiple bonding points (111) on the support chip 2 is manufactured means of ball bonding. (d) shows a SEM picture of a probe manufactured by such method. As visible in the figure, the first element 1 is bonded to the support chip 2 by multiple bonding points (111). Such a configuration allows to tune the length of the cantilever of the probe and therefore allows to tune the resonance frequency of the cantilever, respectively the tip 40 if a tip is bonded to the second section 12 of the first element 1 respectively to the cantilever.

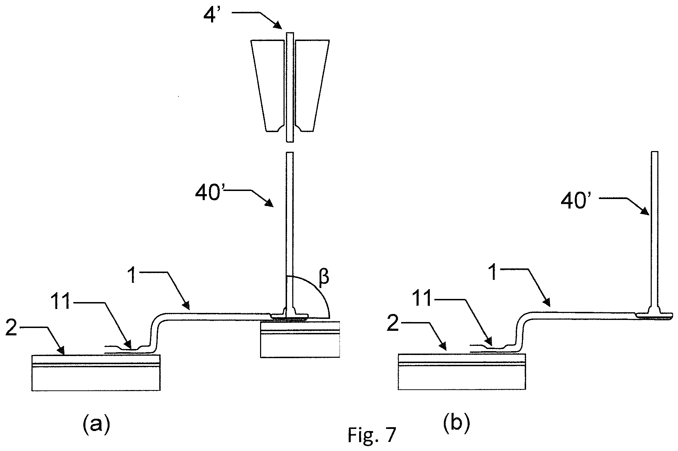

Fig. 7 shows a schematic of a further embodiment according to the invention. The second element 4 is a wire or ribbon, that forms a tip 40'. Instead of tearing the end of the second element 4 into a tip 40 as shown in Fig. 2, the tip 40' in Fig. 4 is cut off a certain distance away from the "ball", where the second element 4 is bonded to the second section 12 of the first element 1 (Fig. 7a and b). An angle between a surface of the cantilever and the longitudinal extension of the bonded second element wire or ribbon 40' is β, with 0 < β ≤ 90°. The length of the bonded second element is in particular between 0.05mm and 10mm.

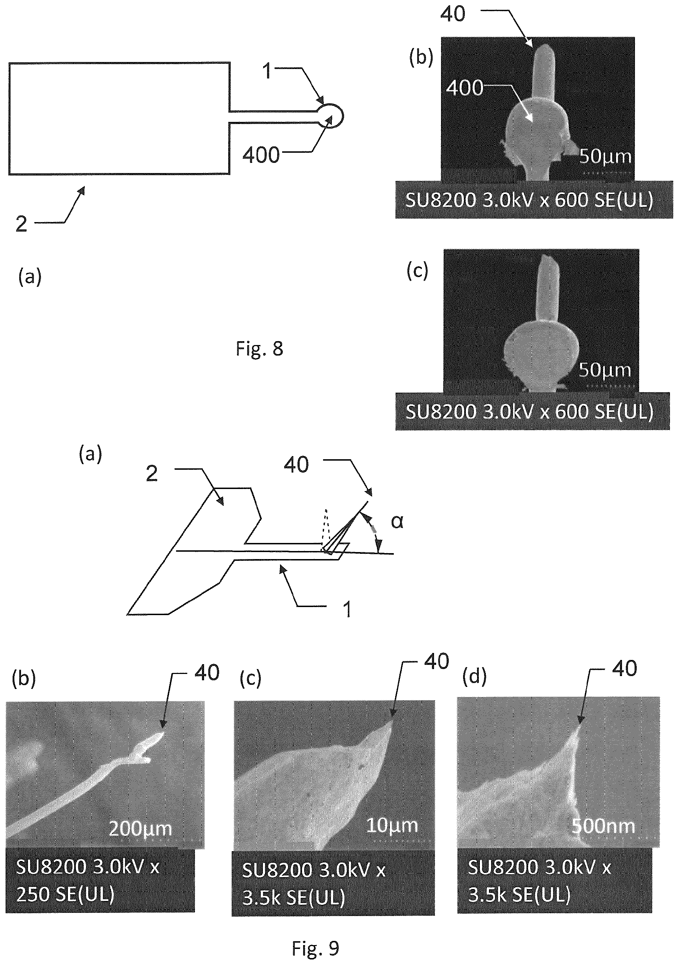

Fig. 8a shows a schematic of a back side 400 of an exemplary probe according to an embodiment of the invention. The probe comprises the support chip 2 with the first element 1 bound to it and a tip 40. The tip 40 is not shown since the view is from the back side 400 of the probe. Such flat back side 400 occurs in particular, if the second section 12 of the first element 1 is pressed against the ultra-flat auxiliary substrate 3 by means of ball or wedge bonding, and is released from the auxiliary substrate 3 afterwards. The flat backside has the advantage that a laser beam which is used in feedback mechanism for performing atomic force microscopy measurements, reflects very well from the back side of the second section 12, respectively from the back side of the cantilever. In a further embodiment, the back side 400 of the second section 12 has a metallic layer, in particular a gold or aluminium layer, bonded at the back side 400 of the second section 12 of the first element 1. The metallic layer can be added to the back side 400 of the first element 1, respectively the second section 12, during the positioning of the second section 12 on the auxiliary substrate 3, which is covered with a metallic layer showing low-affinity for the substrate.. While pressing the second section 12 on the metallic layer of the auxiliary substrate 3, the metallic layer binds to the back side 400 of the second section 12 and releases from the auxiliary substrate 3. Such metallic layer, in particular gold and aluminium, on the back side 400 is advantageous for AFM measurement operations, since the quality of the reflection of a laser spot from the back side 400 of the second section 12 can be tuned by selecting an appropriate metal for reflecting the beam. Fig. 8 b and c show SEM pictures of an embodiment of a back side, wherein a tip 40 is bonded to the front side of the second section 12.

Fig. 9 shows an embodiment of the tip fabricated according to the methods shown in Fig. 2 and 4. Fig. 9a shows a schematic drawing of a probe comprising the support substrate 2, the first element 1 adapted to form a cantilever, and the tip 40. Fig. 9b, 9c and 9d show SEM pictures of such a tip 40 with increasing resolution.

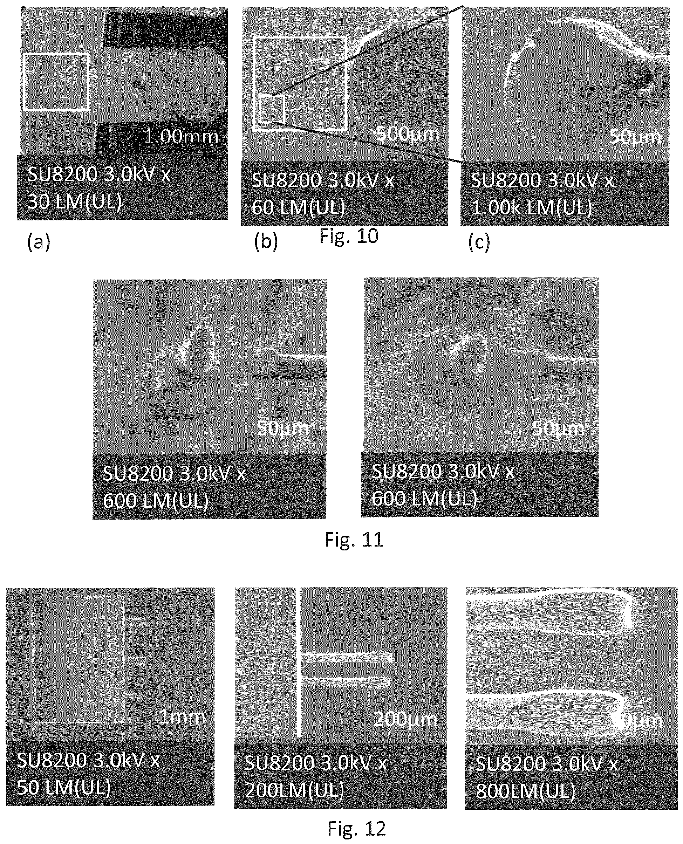

Fig. 10 shows the manufacturing of multiple probes in particular manufactured by a process line, on one support chip 2. Fig. 10a and 10b show each five metallic cantilevers manufactured by an embodiment of the method according to the invention. Fig. 10c shows an ultra-flat backside surface of one of the five metallic cantilevers.

Fig. 11a and 11b show the tip 40 formed on metallic cantilevers shown in Fig. 10 in further method steps according to the invention. The tips are bonded to the front side of the second section 12 by means of bonding a second element 4 to the second section.

Fig. 12 shows a SEM picture of multiple tip-less cantilevers manufactured with a method according to an embodiment of the invention. The three figures show zoom-ins from top to down of the page.

### Examples

### Example 1:

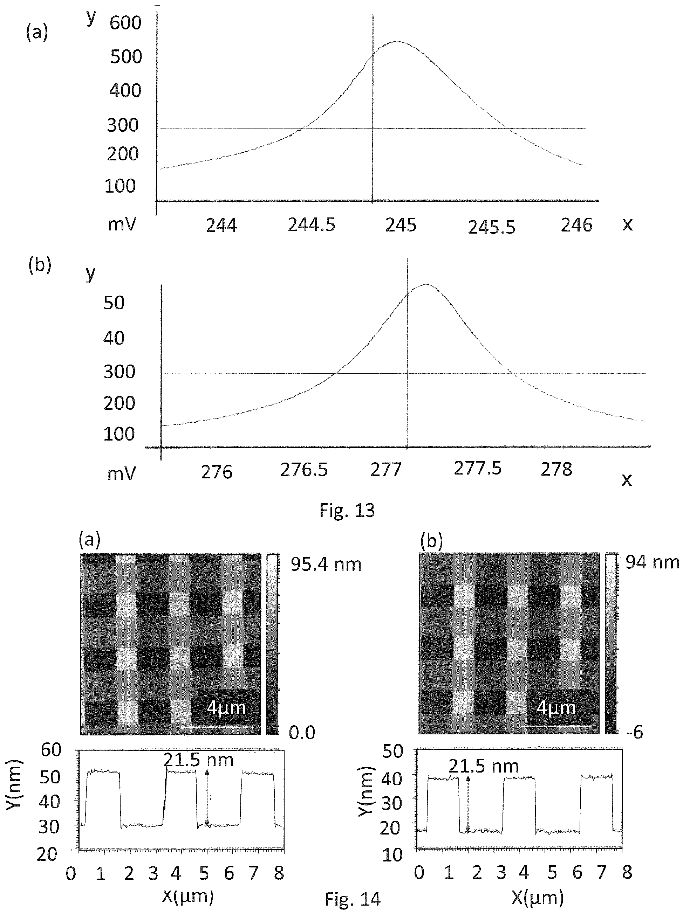

The first example compares the characteristic of a commercial AFM probe with an AFM probe manufactured according to the invention. Frequency sweep measurements were performed on a commercial AFM instrument (Bruker Bioscope Catalyst AFM system with NanoScope 8.15 version of software). For comparing the probes, the frequency sweep of each probe was recorded between 5kHz and 650kHz frequency range, and in each case a high amplitude frequency peak, probably a resonance frequency, was observed. Fig. 13a and 13b show resonance frequency curves of both probes. The x-axis represents the frequency (kHz) and the y-axis represents the driving amplitude (mV). Fig. 13a shows the frequency sweep of a metallic probe according to the invention. This metallic probe had cantilever beam made of gold wire by ball bonding the first section of the wire, and attaching a gold metal tip at the second section of the wire before releasing the second section from the auxiliary substrate. Diameter of the gold wire was 25µm and the length of the cantilever beam was between 400-500µm. Fig. 13b shows a frequency sweep of a commercial tapping mode AFM probe (Micromash HQ:NSC15/AIBS probe for operation in tapping mode) . The measurement demonstrates that the present probe manufactured according to an embodiment of the invention, can be operated as an AFM probe with a commercial AFM tool.

### Example 2:

The second example compares an AFM image obtained with a commercial tapping mode probe (Micromash HQ:NSC15/AI BS) and an AFM image obtained with a metallic probe manufactured according to the invention. Measurements were performed again with the commercial AFM tool (Bruker Bioscope Catalyst AFM system) in tapping mode of operation under environmental conditions. A calibration grid (TGQ1 grating purchased from NT-MDT company) was scanned at scan rate of 0.35Hz for image size of 512 x 512 pixels in tapping mode at the ratio of the amplitude of the set-point oscillation (Asp) to the free oscillation (Ao) between 0.7 and 0.8. Fig. 14a shows an image recorded with a probe manufactured according to an embodiment of the present invention with the respective height profile and Fig. 14b shows an AFM picture recorded with a commercial tapping mode AFM probe with the respective height profile. This example shows, that the probes manufactured by the method according to the invention provide comparable measurement data as commercial probes that are manufactured with conventional methods.

Schematics are not to scale of the orginal embodiments. The SEM pictures are presented with scale bars. Anyway, the dimensions of the manufactured probes might be specified for some embodiments in the specification.

While there are shown and described presently preferred embodiments of the invention, it is to be distinctly understood that the invention is not limited thereto but may be otherwise variously embodied and practiced within the scope of the following claims.

## Claims

1. Method for manufacturing a probe comprising a support chip (2) and an in particular metallic first element(1), comprising the steps of
- bonding a first section (11) of the first element (1) to a metallized surface of the support chip (2),
- positioning, in particular bonding, a second section (12) of the first element (1) on a surface of an auxiliary substrate (3),
wherein the second section (12) is configured to form the end of the first element (1),
- releasing the second section (12) from the auxiliary substrate (3),
wherein a cantilever forms between the first (11) and the second (12) section of the first element (1).

2. The method according to claim 1, wherein the removal of the auxiliary substrate causes the release of the second section (12) from the auxiliary substrate (3) .

3. The method according to claim 1, wherein insufficient bonding strength cause the release of the second section (12) from the surface of the auxiliary substrate (3).

4. The method according to claim 1, wherein a bonding strength between the first section (11) of the first element (1) and the metallized surface of the support chip (2) is higher than a bonding strength between the second section (12) of the first element (1) and the auxiliary substrate.

5. The method according to the preceding claims comprising the steps of
- bonding an in particular metallic second element (4) to the second section (12) of the first element (1), in particular by means of ball bonding, and
- causing the second element (4) to tear into a tip (40), wherein the tip (40) is in particular adapted to perform scanning or point measurements.

6. The method according to claim 5, comprising the step of causing the second element (4) to tear into a tip (40) with a longitudinal extension into a direction with an angle α to a surface of the cantilever, with 25° ≤ α ≤ 90°.

7. The method according to claim 1 to 4, comprising the steps of
- bonding an in particular metallic and in particular short wire or ribbon (4) to the second section (12) of the first element (1), in particular by means of ball bonding or wedge bonding,
wherein the end of the in particular metallic wire or ribbon (4) forms a tip (40'),
wherein an angle between a surface of the cantilever and the longitudinal extension of the wire or ribbon (40') is β, with 0 < β ≤ 90°.

8. The method according to claims 5 to 7 comprising the step of forming the tip (40, 40') by means of applying physical and/or chemical etching methods.

9. The method according to the preceding claims, comprising the steps of executing the method steps automatically.
- bonding the first section (11) of the first element (1) to the metallic surface of the support chip (2) by means of ball bonding, wedge bonding or laser bonding methods, and/or
- positioning and/or bonding the second section (12) of the first element (1) to the surface of the auxiliary substrate (3) by means of ball bonding, wedge bonding or laser bonding methods.

10. The method according to the preceding claims,
wherein the auxiliary substrate has a metallic surface, wherein a metallic layer of this surface transfers to the back surface (400) of the second section (12) of the first element (1) when positioning the second section (12) on the metallic surface of the auxiliary substrate (3) before the release of the second section (12), to form a reflective coating on the back surface (400) .

11. A probe comprising
- a support chip (2),
- an in particular metallic first element (1) having:
- a first section (11) bond to a metallized surface of the support chip, and
- a second section (12) released from an auxiliary substrate (3) to which it was positioned,
wherein the first element (1) ends at the second section (12),
wherein a cantilever forms between the first section (11) and the second section(12).

12. The probe according to claim 11 comprising an in particular metallic second element (4) bonded to the second section (12) of the first element (1) and forming a tip (40),
wherein the tip is in particular adapted to perform scanning or point measurements.

13. The probe according to claims 11 or 12, wherein a back surface (400) of the second section (12) that faces into a direction of the auxiliary substrate, has a reflective and/or flat back surface (400), in particular, wherein the back surface (400) is the surface facing away from the surface comprising the tip.

14. The probe according one of claims 11 to 13, wherein the first element (1) is bonded to the support chip (2) by multiple bonding points (111), in particular the multiple bonding points (111) are manufactured by wedge and/or ball bonding.

15. Use of the probe according to claims 11 to 14 for performing raster surface scanning and/or point measurements using scanning probe microscopy and spectroscopy techniques benefitting from high lateral imaging resolution, high conductivity and large local electromagnetic field enhancements, such as AFM, STM, atomic force spectroscopy, Kelvin probe force microscopy, scanning capacitance microscopy, electrostatic force microscopy, electrochemical force microscopy, tip-enhanced fluorescence spectroscopy, tip-enhanced Raman spectroscopy, nanoscale infrared spectroscopy, scanning near-field optical microscopy and other similar techniques.
